# EUROPEAN PATENT APPLICATION

(11) **EP 1 271 852 A2**
(43) Date of publication of application: **02.01.2003**
(21) Application number: 02291555.7
(22) Date of filing: 21.06.2002
(51) Int. Cl.: H04L 12/28

(54) **Flexible wireless local networks**

(30) Priority: 22.06.2001 US 300269 P; 18.10.2001 US 982485
(71) Applicant: Tadlys Ltd., 76701 Rehovot (IL)
(72) Inventor: Monin, Jonathan H., Rishon Le Zio 75426 (IL); Weissman, Zeev, Ramla 72245 (IL)
(74) Representative: Thévenet, Jean-Bruno

(57) **Abstract**

Apparatus (20) for mobile communications includes a plurality of wireless local area network (WLAN) access points (26) at respective physical locations, linked together in a network (22). The access points have respective logical identities assigned thereto, the logical identities defining channels for use by mobile stations (24) in a vicinity of the network in communicating over the air with the access points. A control unit (28) is coupled to convey signals over the network so as to alter the logical identities assigned to one or more of the access points.

## Description

### FIELD OF THE INVENTION

The present invention relates generally to wireless communications, and specifically to mobile communications over wireless local area networks.

### BACKGROUND OF THE INVENTION

Wireless local area networks (WLANs) are being increasingly used to provide wireless voice and data communications to multiple users, while allowing the users to move about in a confined area served by the network, thus extending the capabilities of wired LANs. Conventional WLANs are made up of a number of access points serving portable radio units, or mobile stations. The access points are usually connected to one or more servers or controllers, which are linked to external networks. Typically, each access point serves a small region, or cell, and all the mobile stations in a given cell can communicate with the corresponding access point. The cell associated with the particular access point with which a mobile station is communicating at any given time is referred to as the "serving cell."

Typically, each of the access points in a WLAN has an "identity," according to which the mobile stations in its cell can identify it and open communication channels with it. In conventional WLANs, the way in which the identity of the access point is defined varies depending on the type of system. For example, different cells may have different carrier frequencies, different frequency hop patterns, different frequency bands, different time slots for time domain multiple access (TDMA), different assigned codes for code domain multiple access (CDMA), or a combination of these identity features. An access point may also have multiples identities of this sort, all of which are permanently fixed to the access point. In roaming from one cell to another, the mobile station is typically required to determine the identity of the new cell that it is entering, and to use the identity in connecting with the new access point over its radio interface, while disconnecting from the previous cell. This process is known in the art as handover.

WLANs typically use radio frequency (RF) bands at or about 2.4 or 5.5 GHz that either have been set aside by European Telecommunications Standards Institute (ETSI) for unlicensed use in Europe, as well as by comparable authorities in other countries, or are licensed frequencies. (In addition, WLANs are planned to be a part of future Fourth-Generation (4G) Cellular Networks in specially-allocated frequency bands.) One of the leading WLAN technologies is Bluetooth™, which is designed to allow instant, short-range digital connections to be made between different electronic devices, replacing the cables that connect current devices. The Bluetooth radio is typically built into a microchip and operates in the 2.4 GHz band. Technical aspects of Bluetooth are described in detail in the Bluetooth specifications (version 1.0B, 1999), which are available at www.bluetooth.com and are incorporated herein by reference.

Bluetooth uses a frequency-hop spread spectrum technique, wherein the frequency band is divided into multiple hop channels. During a connection, the radio units hop from one frequency to another in pseudo-random fashion. A radio unit can simultaneously communicate with up to seven other radio units in a small, local network, known as a "piconet." Each piconet has a unique frequency-hopping channel, which is established by one of the radio units that acts as the master on the piconet. The other units in the piconet must be slaved to the master.

In a typical Bluetooth network configuration, multiple radio units, linked together in a wireline network, are deployed at fixed locations in a given area and serve as network access points for mobile radio units in the area. The access points are typically the masters, while the mobile stations become slaves of the access points to which they connect. The access points typically conform to the LAN Access Profile (LAP) or Network Access Profile (NAP) defined in the Bluetooth specifications. Each access point defines an independent piconet. The Bluetooth standard specifies no means for synchronizing different piconets or for providing centralized roaming support to radio units moving from one piconet to another, as in conventional cellular systems. A central Bluetooth server typically manages the access points, while taking care of upper-level protocol functions, such as authentication and Internet Protocol (IP) routing.

Each access point typically comprises the following elements:
- A 2.4 GHz antenna.
- A single-chip radio module.
- A single-chip baseband module. This module contains a unique, hard-wired 48-bit address and an internal, free-running clock, which define the identity of the access point and determine its frequency-hopping pattern.
- A processor with memory for carrying out higher-layer Bluetooth protocols.
- An Ethernet controller for bridging to the wireline network and to the central server.
Alternatively, some of these functions may be combined, such as in a single chip containing both the radio and baseband circuits. Certain of the higher-layer functions of the access point may alternatively be carried out by the central server, typically by means of a Transport Host Controller Interface (HCI) between the access point and the server, as defined in the Bluetooth specification. Part H of the Bluetooth specification defines three types of transport layers: USB transport, RS232 transport and UART transport. Regardless of these configuration choices, the identity of the access point remains permanently fixed by the baseband module.

Although Bluetooth is cited here as an example of WLAN technology, other WLAN standards have also been defined and are gaining acceptance. One example is the HiperLAN/2 protocol, a standard being developed by the European Telecommunication Standards Institute (ETSI) for broadband transmission in small cells. As another example, IEEE working groups have promulgated the 802.11 standard, specifying communication protocols for use in the 2.4 GHz band. The IEEE 802.11b and 802.11a extensions have been added to the original standard, in order to enable higher data rates in the 2.4 and 5 GHz bands, respectively, for example using Orthogonal Frequency Division Modulation (OFDM).

A network of WLAN access points can be configured to serve as a cellular network, albeit with much smaller cells than in conventional cellular telephone networks. In this vein, for example, PCT Patent Application PCT/SE00/00646 (published as WO 00/69186), whose disclosure is incorporated herein by reference, describes methods and means for creating a cellular radio communication system out of a number of local piconets. In this system, a control node is connected to multiple radio nodes, typically Bluetooth transceivers at fixed locations, which serve mobile radio units that are free to move from one piconet to another. The control node maintains a database of mutually-adjacent piconets and manages handovers between the piconets. The fixed radio nodes thus operate in a manner analogous to public cellular base stations (with cells corresponding to the piconets). The control node is in turn linked to a large-scale telephone network, such as a public switched telephone network (PSTN) or a public land mobile network (PLMN), enabling users of the mobile radio units to access telephone network services.

Conventional cellular networks, which are designed for central management and control, are functionally very different from WLANs, with their distributed control and independent smart nodes. This difference is manifest particularly (although not exclusively) in the ways in which handovers are carried out in the different networks. For example, U.S. Patent 6,038,450, whose disclosure is incorporated herein by reference, describes advanced methods for handover in a cellular system based on orthogonal frequency division multiplexing (OFDM). These methods, however,) do not lend themselves in any natural way to WLANs.

### SUMMARY OF THE INVENTION

It is an object of the present invention to provide improved methods and devices for mobile communications.

It is a further object of some aspects of the present invention to increase the flexibility of use of access points in a wireless local area network (WLAN).

It is yet a further object of some aspects of the present invention to provide enhanced local wireless network features, particularly in networks with very small cells, as in high-frequency WLANs. These cells serve a small number of subscribers but tend to be very dynamic in nature.

As described in the Background of the Invention, in WLANs known in the art, each physical access point has a fixed logical "identity." The identity may be unique, as defined in the Bluetooth standard, or it may repeat itself in cells that are mutually disjoint, as in WLANs based on the 802.11 standard. This "identity" determines the communication channels over which mobile stations can communicate with the access point. It may also be used by the central network server or controller in managing the network, and by the mobile stations in connecting with the access point and in roaming from cell to cell.

In preferred embodiments of the present invention, the logical identities of the access points are separated from their physical identities. In other words, while the physical access points are generally fixed in specific locations, the central network control unit is able to assign different logical identities to the various access points at different times. Consequently, the control unit is able to allocate communication channels flexibly in different parts of the network, so that the channels move to or with the mobile stations. In this manner, the small cells themselves, or their identities or allocated channels, can be attached to the user roaming about the network, rather than to the fixed physical access point. This scheme is particularly appropriate for small cells, as are characteristic of WLANs.

The separation of the physical and logical identities of the access points enables the control unit to perform functions unknown in conventional WLANs, for example:
- Concentrating communication channels in areas in which many mobile stations are active.
- Allowing roaming of users in a manner transparent to the mobile stations by moving the logical identity of a cell from one access point to another, tracking the movement of the mobile stations as they roam through the network. The conventional handover process which usually accompanies a roaming user, and which usually requires active participation of the mobile station, is thus replaced with a "roaming cell" that follows the user in a manner that is substantially seamless from the point of view of the mobile station.
- Providing multi-protocol access points, so that a single access point can alternatively be driven to operate in accordance with different WLAN standards.

The separation of the physical and logical identities of the access points can be accomplished in a variety of different ways, all of which are considered to be within the scope of the present invention. Exemplary embodiments described herein are based on Bluetooth technology, in which the identity of a given access point corresponds to its unique frequency hopping pattern. The principles of the present invention, however, can similarly be applied to other standards, such as the above-mentioned HiperLAN/2 standard and 802.11 variants. More specifically, the Bluetooth baseband module used in these exemplary embodiments, (as described in greater detail hereinbelow) may be replaced by equivalent Media Access Control (MAC) chip set modules of other wireless technologies. In an alternative embodiment, the identity of a given access point corresponds to a pattern used for direct sequence spread spectrum transmission, for use in code division multiple access (CDMA) systems.

In some preferred embodiments of the present invention, the central network control unit comprises a plurality of baseband modules, each configured with a different identity for modulating and demodulating data. The access points comprise radio modules, coupled to the central baseband modules through switching circuitry, which is operated by the control unit so as to assign the baseband module identities to the different access points as desired. In other preferred embodiments, the radio modules are centralized in the control unit, along with the baseband modules, and the switching circuitry comprises RF switches, so that the physical access points need comprise only antennas and possibly certain RF front-end circuitry.

In other preferred embodiments of the present invention, the identities of the baseband modules are programmable. Although conventional Bluetooth baseband modules have hard-coded identities, the identities of baseband modules based on other standards can be programmed, and programmable Bluetooth baseband modules can also be produced. The programmable baseband modules are built into the access points, along with the radio modules, and the logical identities of the access points are changed by sending appropriate programming commands from the central control unit to the baseband modules.

The principles and functionality of the present invention, including attachment of cells to roaming users, can be implemented using any of the programmable configurations and switched configurations described above.

In some preferred embodiments of the present invention, the control unit acts as a central interface to external networks. In Bluetooth systems, each baseband module typically provides a data interface and a circuit-switched voice (pulse code modulation - PCM) interface, which can link to an external Ethernet network and to a PSTN, respectively. In systems known in the art, each of the access points must typically have an independent Ethernet interface and PSTN interface (or must at least have an Ethernet interface and perform protocol conversion to convey PCM data over Ethernet). In preferred embodiments of the present invention, however, the Ethernet interface and the PSTN interface are required at one location only - the control unit.

There is therefore provided, in accordance with a preferred embodiment of the present invention, a method for mobile communications, including:
linking together a network of wireless local area network (WLAN) access points at respective physical locations;
assigning to the access points respective logical identities defining channels for use by mobile stations in a vicinity of the network in communicating over the air with the access points; and
altering the logical identities assigned to one or more of the access points by conveying a signal over transport links in the network.

Preferably, altering the logical identities includes altering the identities while the mobile stations are in communication with the access points, substantially without interrupting the communication.

Further preferably, communicating over the air with the access points includes conveying, over the air and over the transport network, at least one of circuit-switched voice communications and data communications.

In a preferred embodiment, altering the logical identities includes transferring the identities among the access points responsive to movement of the mobile stations in the vicinity of the network. Preferably, transferring the identities includes transferring one of the identities from a first one of the access points to a second one of the access points adjacent to the first one, responsive to the movement of one of the mobile stations away from the first one of the access points and toward the second one. Alternatively, transferring the identities includes assigning a plurality of the identities to each of one or more of the access points so as to increase availability of the channels in an area of the network into which a number of the mobile stations have moved.

In another preferred embodiment, assigning the logical identities includes assigning a common one of the identities to a plurality of the access points whose respective physical locations are either outside a transmission range of one another or overlap each other. In the later case, one logical identity may cover an area equivalent to many small cells - a "super-cell," serving a sparsely-populated area and freeing other logical identities for densely-populated cells.

In a further preferred embodiment, conveying the signals includes reprogramming a programmable identity module in the access points.

Preferably, linking together the network of access points includes linking the access points to a central control unit, and altering the logical identities includes conveying signals over the transport network from the central control unit to the access points. In a preferred embodiment, conveying the signals includes multiplexing signals at the central control unit responsive to the logical identities, and switching the multiplexed signals into the transport network to be conveyed to the access points for demultiplexing, for either transmission over the air or for controlling the transmission of the access points. Preferably, switching the modulated signals includes parallel switching of baseband signals generated at the central control unit. Alternatively, switching the modulated signals includes switching modulated radio frequency (RF) signals generated at the central control unit.

Typically, defining the channels includes determining an air interface pattern for use in communicating over the air, dependent upon the logical identities. In a preferred embodiment, determining the air interface pattern includes determining a pattern for frequency hopping. In an alternative embodiment, determining the air interface pattern includes determining a pattern for direct sequence spread spectrum transmission. In another preferred embodiment, determining the air interface pattern includes setting an initial air interface pattern in accordance with a first wireless network technology, and altering the logical identities includes applying a subsequent air interface pattern in accordance with a second, different wireless network technology.

In still a further preferred embodiment, altering the logical identities includes transferring the identities among the access points responsive to a predetermined plan.

There is also provided, in accordance with a preferred embodiment of the present invention, apparatus for mobile communications, including:
a plurality of wireless local area network (WLAN) access points at respective physical locations, linked together in a network, and having respective logical identities assigned thereto, the logical identities defining channels for use by mobile stations in a vicinity of the network in communicating over the air with the access points; and
a control unit, which is coupled to convey signals over the network so as to alter the logical identities assigned to one or more of the access points.

Preferably, responsive to the signals, the access points are adapted to alter their logical identities while the mobile stations are in communication with the access points, substantially without interrupting the communication. Typically, the access points are configured to exchange at least one of circuit-switched voice communications and data communications over the air with the mobile stations.

Additionally or alternatively, the control unit is adapted to alter the logical identities by transferring the identities among the access points responsive to movement of the mobile stations in the vicinity of the network. Preferably, the control unit is adapted to transfer one of the identities from a first one of the access points to a second one of the access points adjacent to the first one, responsive to the movement of one of the mobile stations away from the first one of the access points and toward the second one. Further additionally or alternatively, the control unit is adapted to reassign a plurality of the identities to each of one or more of the access points so as to increase availability of the channels in an area of the network into which a number of the mobile stations have moved.

Still further additionally or alternatively, the control unit is adapted to alter the logical identities by transferring the identities among the access points responsive to a predetermined plan.

Preferably, the control unit is adapted to assign a common one of the identities to a plurality of the access points whose respective physical locations are outside a transmission range of one another.

In a preferred embodiment, the access points include programmable identity modules, and the control unit is adapted to generate the signals so as to cause the programmable identity modules to be reprogrammed with the altered logical identities.

Typically, the channels have respective air interface patterns for use in communicating over the air, dependent upon the logical identities. In preferred embodiments, the air interface patterns include patterns for frequency hopping or patterns for direct sequence spread spectrum transmission. Optionally, at least one of the air interface patterns is set initially in accordance with a first wireless network technology, and the control unit is adapted to alter the logical identities so as to redefine the at least one of the air interface patterns in accordance with a second, different wireless network technology.

In a preferred embodiment, the central control unit includes a plurality of signal modulators, which are adapted to modulate the signals to be conveyed over transport links in the network responsive to the logical identities, and switching circuitry, coupled to route the modulated signals via the transport network to the access points for transmission over the air. Preferably, the modulated signals include either baseband signals, radio frequency (RF) signals, or intermediate frequency (IF) signals.

There is additionally provided, in accordance with a preferred embodiment of the present invention, apparatus for mobile communications, including:
a plurality of wireless local area network (WLAN) access points at respective physical locations, linked together in a network, each of the access points including:
   a baseband processing module for generating modulated baseband signals, the baseband processing module having a respective logical identity programmably assigned thereto, the logical identity defining a pattern of modulation of the baseband signals for use in communicating with mobile stations in a vicinity of the network; and
   a radio module, coupled to the baseband processing module and adapted to convert the baseband signals to radio frequency (RF) signals for transmission over the air to the mobile stations; and
   a control unit, which is coupled to convey signals over the network so as to reprogram the logical identity of the baseband processing module, thereby changing the pattern of modulation.

In a preferred embodiment, the pattern of modulation includes a frequency hopping pattern used in transmission of the RF signals between the radio module and the mobile stations.

There is further provided, in accordance with a preferred embodiment of the present invention, apparatus for mobile communications, including:
a plurality of wireless local area network (WLAN) access points at respective physical locations, linked together in a network, and adapted to transmit radio frequency (RF) signals over the air to mobile stations in a vicinity of the network; and
a control unit, including:
   a plurality of baseband processing modules for generating modulated baseband signals, the baseband processing modules having respective logical identities defining channels for use in communicating over the air with the mobile stations; and
   switching circuitry, adapted to couple the baseband processing modules to the access points so that the access points transmit the RF signals on respective ones of the channels assigned by the switching circuitry.

Preferably, the wireless access points include radio modules, which are coupled to receive the baseband signals generated by the baseband processing modules and to generate the RF signals responsive thereto.

Alternatively, the control unit further includes a plurality of radio modules coupled to the baseband processing modules so as to generate the RF signals responsive to the baseband signals, and the switching circuitry includes RF switching circuitry, which is adapted to convey the RF signals to the access points for transmission.

In a preferred embodiment, at least one of the access points includes a plurality of antennas, and the switching circuitry is adapted to couple the baseband processing modules to the at least one of the access points so that each of the plurality of the antennas transmits the RF signals over the air on a respective one of the channels.

The present invention will be more fully understood from the following detailed description of the preferred embodiments thereof, taken together with the drawings in which:

### BRIEF DESCRIPTION OF THE DRAWINGS

Fig. 1 is a block diagram that schematically illustrates a wireless local area network (WLAN), in accordance with a preferred embodiment of the present invention; and
Figs. 2-7 are block diagrams that schematically shows details of wireless network access apparatus, in accordance with various preferred embodiments of the present invention.

### DETAILED DESCRIPTION OF PREFERRED EMBODIMENTS

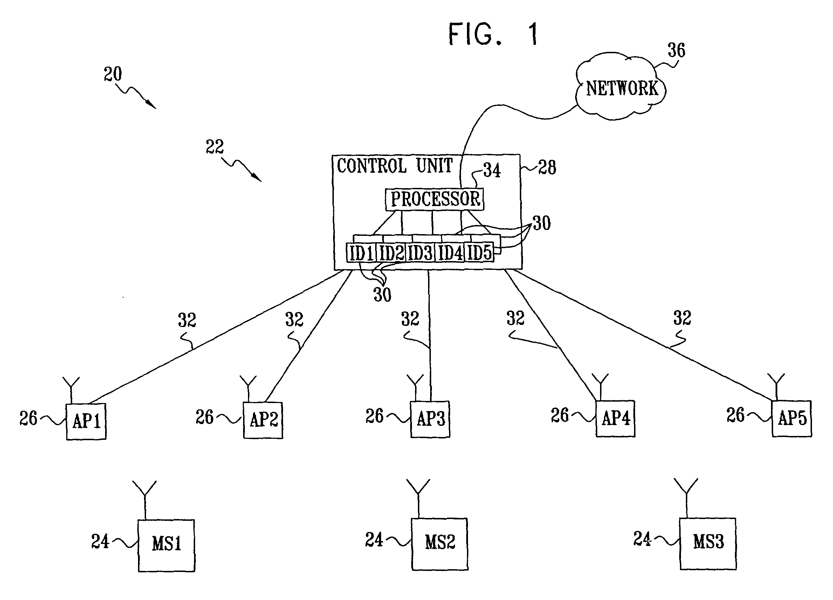

Fig. 1 is a block diagram that schematically illustrates a flexible wireless local area communication system 20, in accordance with a preferred embodiment of the present invention. By way of example, it will be assumed that system 20 is based on Bluetooth technology, operating at around 2.4 GHz, as described above. Alternatively, the principles embodied in system 20 may be implemented using other WLAN technologies, including different frequency bands, different signal modulation and multiplexing schemes, and different data link and network communication protocols.

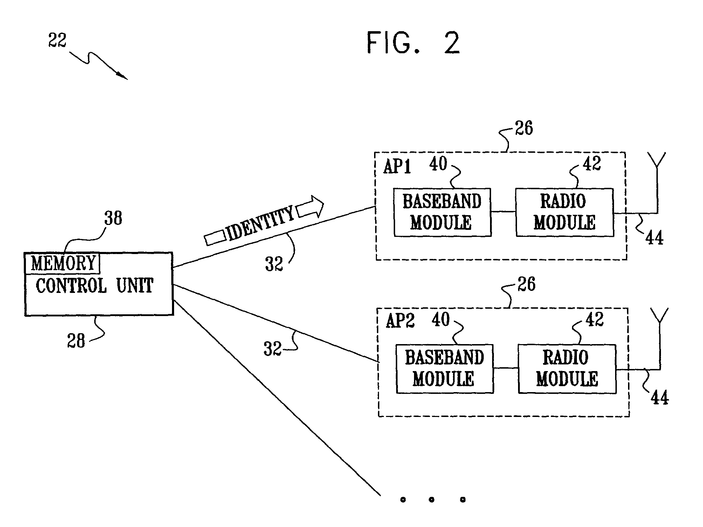

System 20 comprises a network 22 of generally fixed access points 26 (labeled AP1, AP2, ...), which serve mobile stations 24 (MS1, MS2, ...) in a vicinity of the network. Typically, in a Bluetooth-type or other WLAN system, the access points are mounted on walls and ceilings in a building or other facility in which network 22 is deployed. A central control unit 28 comprises multiple logical identity modules 30 (ID1, ID2, ...), which are assigned by the control unit to access points 26. The identity modules in the control unit, transport network (represented by transport channels 32) and front-end circuitry of the access points may take different forms, as shown in Figs. 2-7 below. Control unit 28 communicates with access points 26 via transport channels 32, which typically comprise coaxial cables or other media suitable for carrying signals between the control unit and access points. These signals include the signaling required for assignment of the different logical identity modules 30 to respective access points 26.

A processor 34 manages the functions of control unit 28 and, by extension, of system 20 as a whole. Processor 34 typically comprises an embedded microprocessor or a general-purpose computer processor, which is programmed to assign the identity modules to the access points in response to conditions in network 22, and to reassign the identity modules when required. Preferably, processor 34 learns the conditions of the network in real time and uses this information in assigning the access point identities. A variety of methods may be used for this purpose. For example, signal strength levels from each mobile station may be measured at the serving access point, which is currently communicating with the mobile station and, selectively, at neighboring access points, which are temporarily assigned the same identity. When the signal strengths indicate that a certain mobile station may be served better from one of the neighboring access points, the identity of the serving access point is preferably transferred to the neighboring access point. The original access point may or may not stay connected to the logical identity which is now linked to the neighboring access point. Alternatively or additionally, the assignment of identity modules may be activated in accordance with a pre-planned program. For example, when many mobile stations are expected to appear in a particular location at a certain time (such as at an arrival gate in the airport, ten minutes after landing), extra identities may be assigned to access points near the location.

Preferably, processor 34 is also linked to an external network 36, such as a local area network (LAN), wide area network (WAN), Internet, PLMN, PSTN, or other network types known in the art. Such links enable mobile stations 24 to access services of the external network via access points 26, using only a single interface between external network 36 and control unit 28.

As noted above, in Bluetooth networks, the "identity" of an access point corresponds to its unique 48-bit address and clock, which determine the frequency hopping pattern that the access point will adopt as piconet master. In network 22, this identity is embodied in modules 30, either in hardware or software, as described below. The frequency hopping pattern that each of access points 26 is to carry out is conveyed directly or indirectly to the access point via channels 32, rather than being fixed in the hardware of the access point as in Bluetooth networks known in the art. The same identity module 30 (say ID1) can even be assigned to multiple access points 26 simultaneously - a feature that does not exist in networks, such as Bluetooth, in which the identities of the access points are fixed.

Preferably, this identity swapping mechanism is used as an intermediate stage in the handover process. For example, assuming mobile station MS1 to be slaved to access point AP1 and to be moving from left to right in the figure plane of Fig. 1, the logical identity of AP1 may be transferred to AP2 in a manner transparent to the mobile station. MS1 is thus handed over from AP1 to AP2 while remaining unaware that the physical identity of its master has changed, and maintaining the same frequency hopping pattern without interruption. in this way, the moving mobile station is served by a "moving cell" that is associated with it.

As another example, when mobile stations 24 are unevenly distributed in the area of network 22, several identity modules 30 can be assigned to one access point 26, or many identity modules 30 can be assigned to several access points 26 in a correspondingly uneven manner. This feature does not exist in WLANs known in the art, and cannot be supported by systems in which the logical identities of the access point are fixed. In this configuration, an access point is assigned several different identities, so as to create a number of overlapping cells in the same location and support a larger number of mobile stations. For example, in the case of the Bluetooth standard, each piconet can support no more than seven active mobile stations simultaneously. With multi-identity configuration, however, each access point can support several piconets, say three piconets, for a total of 21 active mobile stations.) The same identity may also be assigned simultaneously to different, mutually-distant access points in areas of the network that are sparsely populated with mobile stations. In effect, this assignment creates a single cell that is geographically non-contiguous. The same identity can also be assigned to contiguous cells, creating a large "super-cell" of flexible shape.

The individual identities of identity modules 30 may correspond not only to the relevant frequency and/or timing characteristics of access points within a single network technology, but may also refer to different network technologies that are within the transmission/reception capability of access points 26 and are supported by channels 32 of the transport network. For example, assuming that the access points are equipped to operate in the 2.45 GHz band with 100 MHz bandwidth, some of the identity modules may have Bluetooth identities, while others may have identities corresponding to different protocol and air interface schemes, such as IEEE 802.11b. Depending on the implementation details, any given access point in network 22 can be assigned to serve either Bluetooth, HiperLAN/2 or 802.11-type mobile stations, and can be later reassigned to serve other types if required. In this manner, the system can serve mobile stations in a preferred manner by allowing different types of wireless communication standards. The system can also allow standards that interfere with each other to co-exist by implementing spatial multiplexing.

Fig. 2 is a block diagram that schematically shows details of network 22, illustrating a method for assignment of identities to access points 26, in accordance with a preferred embodiment of the present invention. In this embodiment, identity modules 30 (Fig. 1) are software entities, stored in a memory 38 of control unit 28 and assigned to access points 26 by processor 34 (Fig. 1) by sending software messages to the access points. For the case of Bluetooth standard, each such software entity comprises a database entry that includes the 48-bit address and any other data required for re-programming of the access point identity, such as a pseudo-random clock phase associated with the logical identity.

Each access point 26 comprises a programmable baseband module 40 and a radio module 42, connected to an antenna 44. Unlike the baseband modules of Bluetooth transceivers known in the art, whose identities are typically hard-coded, the identity of module 40 is determined by assignment messages from control unit 28 sent through transport channels 32. When the baseband module receives such a message, it updates its address, sets its clock phase as required and performs any additional process required to adopt the new identity. This specific scheme allows assignment of just one identity module to each physical access point.

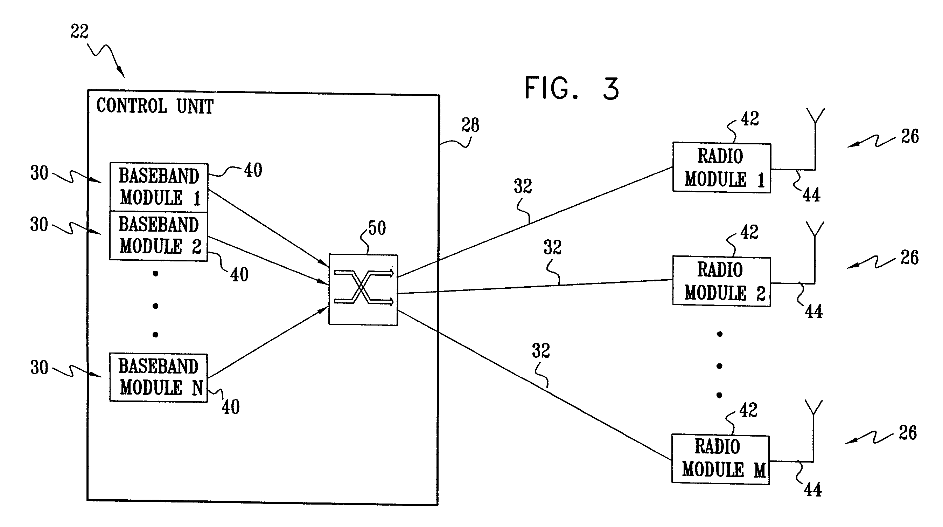

Fig. 3 is a block diagram that schematically shows details of network 22, in accordance with another preferred embodiment of the present invention. In this case, baseband modules 40 are contained in control unit 28, physically separate from radio modules 42. The baseband modules may be standard Bluetooth baseband chips, with hard-coded identities. A switch matrix 50 connects the baseband modules to the appropriate radio modules, preferably under the control of processor 34 (Fig. 1) The switch matrix is a N x M matrix, connecting N baseband modules to M radio modules, most preferably over digital transport channels. It is not necessary that N and M be equal, and network 22 may comprise either excess baseband modules (i.e., excess identities) or excess access points, depending on the intended application and use profile of the network. Some embodiments may allow extreme cases such as M=1.

Switch matrix 50 may, in general, represent a set of switch matrices. The number of switch matrices in a set depends on the number of different signals that must be transferred in parallel between one baseband module and one radio module. For example, there are typically seven or eight different signals exchanged between a Bluetooth baseband module and a Bluetooth radio module. The signals comprise, *inter alia,* a Transmit signal, Receive signal, Signal Strength indication, and Clocks.

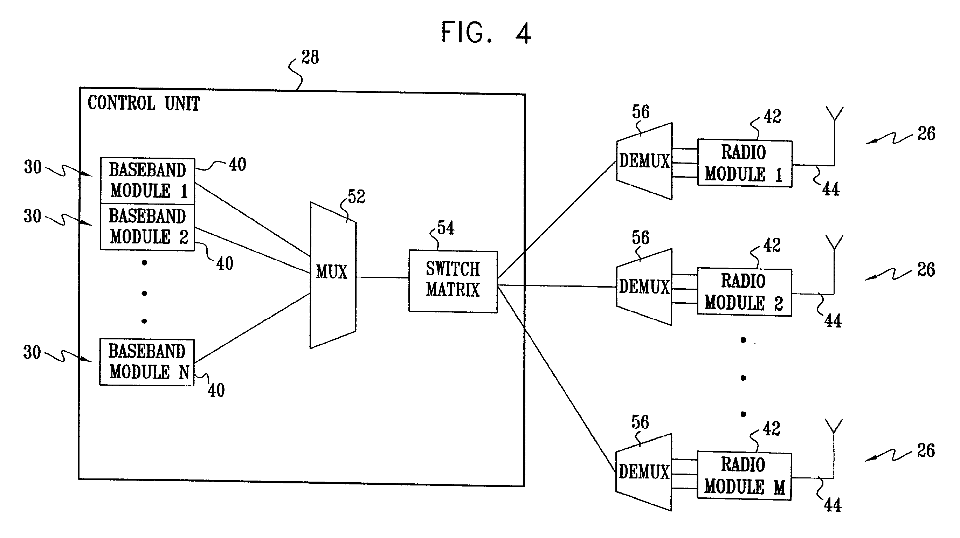

Fig. 4 is a block diagram that schematically shows details of network 22, in accordance with yet another preferred embodiment of the present invention. In this embodiment, baseband modules 40 in control unit 28 are coupled to radio modules 42 by a switch matrix 54, which typically includes one matrix of switches for transmission and another for receiving signals. In the transmission part, the different signals that conventionally run in parallel between a baseband module and a radio module are preferably multiplexed into one combined signal by a multiplexer 52, and are then switched by the single switch matrix 54 and transported through the transport network to access points 26. In this embodiment, each access point includes a demultiplexer 56, which receives the combined signal and outputs the different parallel signals required to drive radio module 42. A similar but opposite configuration is duplicated for the receive portion of the system.

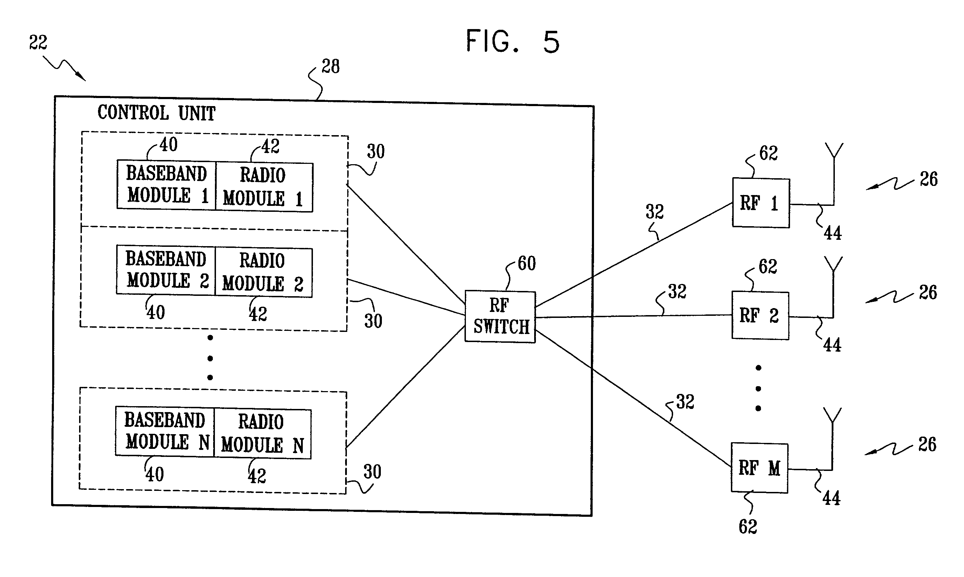

Fig. 5 is a block diagram that schematically shows details of network 22, in accordance with still another preferred embodiment of the present invention. Here, both baseband modules 40 and radio modules 42 are contained in control unit 28, and are connected to access points 26 via a RF switching matrix 60. The access points in this case comprise antennas 44 and content-limited RF front-end circuits 62, such as RF filters and low-noise amplifiers, as are known in the art. Channels 32 comprise media suitable for carrying RF signals, such as high-frequency coaxial cables or optical fibers (in which case front-end circuits 62 and the outputs of RF switching matrix 60 must include suitable conversion components). In a variant of this scheme, the switching matrix itself may comprise one or more optical switches.

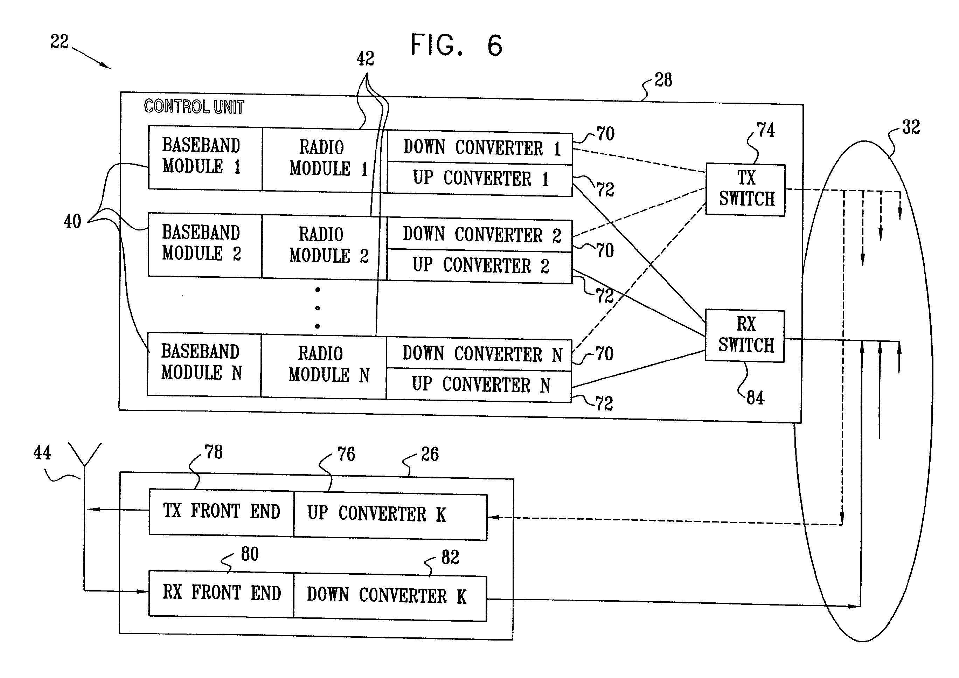

Fig. 6 is a block diagram that schematically illustrates an alternate configuration of network 22, in accordance with a preferred embodiment of the present invention. In this embodiment, in the transmission path, the RF output from radio modules 42 at 2.4 GHz (for example) is downconverted to an intermediate-frequency (IF) signals, at around 100 MHz, for example, by downconverters 70. By downconverting the signal, the burden on the switch matrix is relaxed and a lower-frequency Tx video switch matrix 74 may be used instead. The output of the switch matrix 74 is conveyed by transport network 32 to access points 26. Once again, the burden on the transport network is relaxed in terms of high-frequency transport. In this case, the access points include upconversion circuitry 76 and Tx front end circuits 78 for 2.4 GHz RF operation. The receiving path duplicates the transmission path, with Rx front end circuits 80 and downconversion circuitry 82 at the access points, passing signals via a Rx switch matrix 84 to upconverters 72 at the control unit.

An important advantage of the configuration shown in Fig. 6 is that it can use standard chip-sets in control unit 28, without the need for transport network 32 to operate at high frequency. Standard chip-sets for the Industrial/Scientific/Medical (ISM) band transmit and receive at 2.4 GHz. Alternatively, a dedicated transceiver may be designed with IF output and input, for example at 100 MHz. In this case, only access points 26 must have upconversion and downconversion circuits.

Switch matrix 74 has N inputs (from N radio modules 42) and K outputs (directed to K access points 26), while switch matrix 84 has K inputs and N outputs. K is not necessarily equal to N. Several radio modules can be directed to one front end, thereby increasing the capacity at one cell on a fixed or variable basis. Alternatively, each radio module may be connected to more than one access point, in which case the area covered by a given pico-cell is effectively increased.

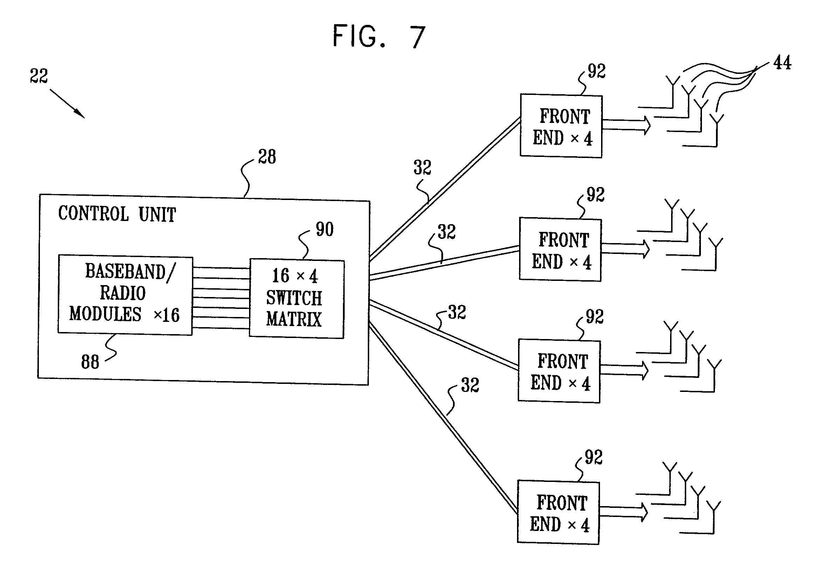

Fig. 7 is a block diagram that schematically shows details of network 22, in accordance with yet another preferred embodiment of the present invention. This embodiment combines elements of the two preceding embodiments. A set 88 of sixteen baseband and radio modules is coupled by a switch matrix 90 to four access point front ends 92. In the embodiment shown in the figure, each front end supports four separated antennas, which serve four respective, non-overlapping pico-cells, depending on the signals conveyed to the front end by switch matrix 90. The numbers of components (baseband modules, access points, antennas) in this configuration are illustrative only.

The configurations of Figs. 5, 6 and 7 are particularly advantageous in multi-technology network systems, as mentioned above, in which access points 26 can be assigned to implement different network technologies within the same general frequency range. For this purpose, certain of radio modules 42 may be Bluetooth modules, for example, while others are IEEE 802.11b modules. RF switching matrix 60 then determines which type of module will be coupled to each of the access points.

It will be appreciated that the preferred embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

## Claims

1. A method for mobile communications, comprising:
linking together a network (22) of wireless local area network (WLAN) access points (26) at respective physical locations;
assigning to the access points respective logical identities defining channels for use by mobile stations (24) in a vicinity of the network in communicating over the air with the access points; and
altering the logical identities assigned to one or more of the access points by conveying signals over the network.

2. A method according to claim 1, wherein altering the logical identities comprises transferring one of the identities from a first one of the access points to a second one of the access points adjacent to the first one, responsive to movement of one of the mobile stations away from the first one of the access points and toward the second one.

3. A method according to claim 1 or 2, wherein altering the logical identities comprises assigning a plurality of the identities to each of one or more of the access points so as to increase availability of the channels in an area of the network into which a number of the mobile stations have moved.

4. A method according to any of the preceding claims, wherein assigning the logical identities comprises assigning a common one of the identities to a plurality of the access points whose respective physical locations are outside a transmission range of one another.

5. A method according to any of the preceding claims, wherein linking together the network of access points comprises linking the access points to a central control unit (28), and
wherein altering the logical identities comprises conveying the signals over the network from the central control unit to the access points by multiplexing the signals at the central control unit responsive to the logical identities, and switching the multiplexed signals in the network to the access points for demultiplexing and transmission over the air.

6. A method according to any of the preceding claims, wherein defining the channels comprises determining an air interface pattern for use in communicating over the air, dependent upon the logical identities.

7. Apparatus (20) for mobile communications, comprising:
a plurality of wireless local area network (WLAN) access points (26) at respective physical locations, linked together in a network (22), and having respective logical identities assigned thereto, the logical identities defining channels for use by mobile stations (24) in a vicinity of the network in communicating over the air with the access points; and
a control unit (28), which is coupled to convey signals over transport links (32) in the network so as to alter the logical identities assigned to one or more of the access points.

8. Apparatus according to claim 7, wherein the control unit is adapted to alter the logical identities by transferring the identities among the access points responsive to movement of the mobile stations in the vicinity of the network.

9. Apparatus according to claim 7 or 8, wherein the central control unit comprises:
a plurality of signal modulators (40), which are adapted to modulate the signals to be conveyed over the network responsive to the logical identities; and
switching circuitry (50), coupled to route the modulated signals via the network to the access points for transmission over the air.

10. Apparatus according to any of claims 7-9, wherein the channels have respective air interface patterns for use in communicating over the air, dependent upon the logical identities.
